# EUROPÄISCHE PATENTANMELDUNG

(11) **EP 2 839 882 A1**
(43) Veröffentlichungstag der Anmeldung: **25.02.2015**
(21) Anmeldenummer: 14175018.2
(22) Anmeldetag: 30.06.2014
(51) Int. Cl.: B05B 7/00, B05B 17/06, B23Q 11/10

(54) **Vorrichtung zur Aerosolerzeugung**

(30) Priorität: 06.08.2013 DE 102013108458
(71) Anmelder: Rother Technologie GmbH & Co. KG, 72574 Bad Urach (DE)
(72) Erfinder: Rother, Reiner, 72574 Bad Urach (DE)
(74) Vertreter: Kohler Schmid Möbus

(57) **Zusammenfassung**

Eine Vorrichtung zur Erzeugung von Aerosol aus einem fluiden Medium (7) in einem Druckbehälter (8), der einen um 1 bar höheren Behälterinnendruck aufweist, mit einer Mediumpumpe (6), die fluides Medium über eine Zuführleitung (10) in den Druckbehälter befördert, sowie mit einer Aerosolleitung (12), über welche im Druckbehälter erzeugtes Aerosol aus dem Druckbehälter zu einem Aerosolaustritt (13) gefördert werden kann, ist dadurch gekennzeichnet, dass ein UltraschallGenerator (1) zur Erzeugung hochfrequenter elektrischer Schwingungen vorgesehen ist, welcher über eine HF-Leitung (2) mit einem mechanischen Vibrationssystem (3, 4, 5) zur Erzeugung von Ultraschall-Schwingungen verbunden ist, dass das Vibrationssystem eine in den Druckbehälter ragende Sonotrode (5) umfasst, die eine mit Ultraschall-Frequenz vibrierende Fläche (5a) aufweist, und dass von der Mediumpumpe befördertes fluides Medium im Druckbehälter auf die vibrierende Fläche gespritzt und daraus durch Zerstäubung beziehungsweise Vernebelung Aerosol im Druckbehälter erzeugt werden kann, welches über die Aerosolleitung aus dem Druckbehälter zum Aerosolaustritt gefördert werden kann. Damit kann ein zentrales Druckluft-Versorgungsnetz in einem einschlägigen Betrieb um mindestens 1 bar kleiner ausgelegt werden.

## Beschreibung

Die Erfindung betrifft eine Vorrichtung zur Erzeugung von Aerosol aus einem fluiden Medium, insbesondere einem flüssigen Kühlmedium wie beispielsweise Öl, in einem Druckbehälter, der einen gegenüber dem umgebenden Atmosphärendruck um mindestens 1 bar höheren Behälterinnendruck aufweist, mit mindestens einer Mediumpumpe, die fluides Medium über eine Zuführleitung in den Druckbehälter befördert, sowie mit einer Aerosolleitung, über welche im Druckbehälter erzeugtes Aerosol aus dem Druckbehälter zu einem Aerosolaustritt gefördert werden kann.

Eine derartige Vorrichtung ist bekannt aus der EP 2 338 587 A1.

Die bekannte Vorrichtung zur Aerosolerzeugung (Aerosolerzeuger) umfasst eine Injektoreinheit zur Erzeugung eines Aerosols aus einer Flüssigkeit und einem Transportgas, wobei das Aerosol von der Injektoreinheit in einen Aerosolbehälter eingetragen wird, eine Flüssigkeitsleitung zum Zuleiten der Flüssigkeit in die Injektoreinheit und eine Transportgasleitung zum Zuleiten des Transportgases in die Injektoreinheit. Mittels einer vom Aerosolbehälter abgehenden Aerosolausführungsleitung ist das Aerosol aus dem Aerosolbehälter zu einem Aerosolverbraucher ausführbar. Weiter ist eine Steuereinheit, insbesondere zur Steuerung des Zuleitens des Transportgases in die Injektoreinheit vorgesehen.

Aus DE 35 16 144 C2 ist eine Vorrichtung zur Erzeugung von Aerosol entnehmbar, mit einer Aerosolleitung, über welche erzeugtes Aerosol aus einem Behälter zu einem Aerosolaustritt gefördert werden kann. Die Vorrichtung verfügt über einen Ultraschallgenerator zur Erzeugung hochfrequenter elektrischer Schwingungen, welcher über eine HF-Leitung mit einem mechanischen Vibrationssystem zur Erzeugung von Ultraschall-Schwingungen verbunden ist.

Als Aerosolverbraucher sind üblicherweise mit dem Aerosol zu kühlende Werkzeuge an die Aerosolausführungsleitung angeschlossen. Das Aerosol wird dabei durch einen Kühlkanal im Werkzeug durchgeführt. Der Aerosolerzeuger bildet dabei eine so genannte Minimalmengenschmierung aus. Dabei ist die Flüssigkeit meist ein Öl, und als Transportgas wird Luft verwendet. Das Aerosol ist ein Gemisch aus dem Transportgas und darin fein verteilten Flüssigkeitströpfchen, die im Falle von Öl Durchmesser im Bereich von einem halben bis einem Mikrometer aufweisen können. Das Aerosol wird von der Injektoreinheit üblicherweise nach dem Venturidüsenprinzip erzeugt. Es wird also das Transportgas durch eine Venturidüse in den Aerosolbehälter eingeblasen, wobei die Flüssigkeit vom Transportgasstrom derart mitgenommen wird, dass sie innerhalb des Transportgases fein zerstäubt wird. Zur Aerosolerzeugung mittels der Injektoreinheit ist also ein Differenzdruck zwischen dem Druck des Transportgases und dem Druck des Aerosols im Aerosolbehälter

(Aerosoldruck) notwendig vorhanden, wobei selbstverständlich der Druck des Transportgases größer als der Aerosoldruck ist.

Die Menge des aus dem Aerosolbehälter ausgeführten Aerosols hängt vom Durchmesser des Kanals des angeschlossenen Verbrauchers, beispielsweise eines Werkzeugs, und vom Druck des Aerosols im Aerosolbehälter ab. Die ausgeführte Menge des Aerosols bestimmt dabei, wie stark die Kühlung des Werkzeugs ist. Die Kühlung wird dabei durch sich auf dem Werkzeug durch Entmischen bzw. Kondensieren absetzende Flüssigkeit bewirkt. Üblicherweise wird der Druck des Aerosols im Aerosolbehälter durch die Menge des beim Aerosolerzeugen in den Aerosolbehälter eingetragenen Transportgases und durch eine vom durch die Aerosolausführungsleitung ausgeleiteten Aerosol erzeugte Druckentlastung bestimmt. Der Aerosoldruck ist also an die Aerosolerzeugung gekoppelt. Dabei wird das Transportmedium nicht nur zum Erzeugen des Aerosols verwendet, sondern auch zum Transport der darin erzeugten Flüssigkeitströpfchen zum Aerosolverbraucher durch die Aerosolausführungsleitung.

Ist der Durchmesser des Kühlkanales klein, so steht bei gegebenem Aerosoldruck nur eine geringe Menge Flüssigkeit (Kühlflüssigkeit) zum Kühlen beim Werkzeug bereit, da nur eine geringe Aerosolmenge ausgeführt wird. Es muss also, um eine ausreichende Menge von Kühlflüssigkeit bereitzustellen, der Druck erhöht werden. Gleichzeitig wird durch das Ausführen von Aerosol nur eine kleine Druckentlastung im Aerosolbehälter erreicht. Es ist also bei permanenter Aerosolerzeugung nur ein geringer Differenzdruck zwischen dem Aerosoldruck im Aerosolbehälter und dem Transportgasdruck vorhanden. Dadurch wird das Aufrechterhalten einer gleichbleibenden Aerosolqualität, d. h. einem gleichbleibenden Volumenanteil der Flüssigkeit im Aerosol, erschwert. Es wird deshalb bei bekannten Aerosolerzeugern häufig eine getaktete, d. h. periodisch unterbrochene Aerosolerzeugung durchgeführt. Letzteres führt jedoch zu Druckschwankungen und damit zu ungleichmäßiger Kühlung des angeschlossenen Werkzeugs.

Um dieses Problem zu umgehen schlägt die WO 2005/039783 einen Aerosolerzeuger vor, bei dem zusätzlich zur Aerosolerzeugung mittels der Injektoreinheit eine Transportgaszuleitung in den Aerosolbehälter vorgesehen ist. Die Aerosolerzeugung ist dabei also vom Transportgasstrom weitestgehend entkoppelt. Dabei wird lediglich ein geringer Teilvolumenstrom des durch die Aerosolausführungsleitung zum Werkzeug ausgeführten Aerosols von der Injektoreinheit in den Aerosolbehälter eingebracht. Der Differenzdruck zwischen dem zur Aerosolerzeugung in die Injektoreinheit zugeführten Transportgas und dem Aerosoldruck im Aerosolbehälter kann dabei über das durch die Transportgaszuleitung separat eingeführte Transportgas geregelt werden.

Auch bei diesem Aerosolerzeuger ist keine gleichbleibende Aerosolqualität gewährleistet, da die Aerosolerzeugung, z.B. durch Zu- und Abschalten mehrerer Injektoreinheiten, an Strömungsgeschwindigkeitsänderungen des Transportgasstromes durch die Transportgaszuleitung angepasst werden muss, um den Volumenanteil der Flüssigkeit im Aerosol konstant zu halten. Weiter ist der Minimaldurchmesser eines Kühlkanals des angeschlossenen Werkzeugs durch die Menge des von einem Injektor minimal zu erzeugenden Aerosols nach unten beschränkt.

Die Aerosolerzeugung mit Aerosolerzeugern vor der EP 2 338 587 A1 konnte deshalb nur relativ träge an die durch die Aerosolausführungsleitung ausgeführte Aerosolmenge angepasst werden.

Um diese Nachteile des früheren Standes der Technik zu vermeiden, wobei insbesondere Druckänderungen im Aerosolbehälter bei gleichbleibender Aerosolqualität schnell ausgleichbar sein sollen, schlägt die EP 2 338 587 A1 eine Vorrichtung zur Aerosolerzeugung vor, bei der eine Aerosolregelleitung zum Abführen von Aerosol aus dem Aerosolbehälter und ein Aerosoldruckregelventil vorgesehen, wobei das Aerosoldruckregelventil von der Steuereinheit derart steuerbar ist, dass durch das Abführen des Aerosols ein vorgegebener bzw. vorgebbarer Aerosolsolldruck im Aerosolbehälter einstellbar ist. Dadurch kann ein Überdruck im Aerosolbehälter gezielt abgelassen werden, sodass immer, d. h. unabhängig vom Aerosolvolumen, das zum Aerosolverbraucher abgeführt wird, eine ausreichende Druckdifferenz zwischen dem Transportgas in der Transportgasleitung und dem Innendruck im Aerosolbehälter besteht bzw. eingestellt werden kann. Das Aerosol kann kontinuierlich mit gleichbleibender Qualität erzeugt werden. Überschüssiges Aerosol wird einfach durch die Aerosolregelleitung abgelassen. Es wird also eine zusätzliche Druckentlastung zur Druckentlastung durch einen Aerosolverbraucher bereit gestellt, der das Einstellen einer z. B. an der Steuereinheit vorgebbaren Druckdifferenz zwischen Aerosolsolldruck und dem Druck des Transportgases, d. h. einer Solldruckdifferenz, von der Steuereinheit über das Aerosoldruckregelventil ermöglicht. Falls erforderlich, kann über das Aerosoldruckregelventil aber nicht nur Aerosol aus dem Behälter abgeführt sondern auch der Druck im Behälter erhöht werden. Aerosolsolldrücke und/oder Solldruckdifferenzen und/oder Solltransportgasdrücke können z. B. als Parameterwerte in der Steuerung hinterlegt sein. Ein Anwender kann dann beispielsweise einen für ein bestimmtes, als Aerosolverbraucher angeschlossenes, Werkzeug zweckdienlichen Parametersatz auswählen. Hierzu können Empfehlungen beigefügt sein, welcher Parametersatz zu welchem Kühlkanaldurchmesser eines Werkzeugs sinnvoll ist.

Allerdings haben auch die oben beschriebenen verbesserten Vorrichtungen zur Aerosolerzeugung immer noch gravierende Nachteile:

Bisherige Aerosolerzeuger (MMS-Systeme) erzeugen Aerosol - wie oben beschrieben - üblicherweise mit Hilfe einer Venturidüse. Durch einen Differenzdruck (=Düsendruck-Behälterdruck) wird an der Venturidüse Aerosol im Druckbehälter erzeugt. Der Düsendruck ist dabei der höhere Druck, der Behälterdruck ist der kleinere Druck. Mit dem Behälterdruck wird dann das erzeugte Aerosol z.B. zur Kühlung und/oder Schmierung durch Zerspanwerkzeuge geführt. In jedem Fall wird bei dieser bekannten Art der Aerosolerzeugung ein höherer Düsendruck benötigt. Dazu muss dann natürlich stets eine Druckluft-Versorgung vorgehalten werden, das so ausgelegt ist, dass es zumindest den entsprechenden erforderlichen minimalen Enddruck an der Düse erzeugen kann.

Aufgabe der vorliegenden Erfindung ist es demgegenüber, eine gattungsgemäße Vorrichtung der eingangs beschriebenen Art zur Erzeugung von Aerosol aus einem fluiden Medium mit möglichst simplen technischen Mitteln und wirtschaftlich preisgünstig dahin gehend zu verbessern, dass dieser erhöhte Düsendruck gar nicht erforderlich ist und somit ein zentrales Druckluft-Versorgungsnetz in einem einschlägigen Betrieb um mindestens 1 bar kleiner ausgelegt werden kann.

Erfindungsgemäß wird diese Aufgabe auf ebenso überraschend einfache wie wirkungsvolle Art und Weise dadurch gelöst, dass ein Ultraschall-Generator zur Erzeugung hochfrequenter elektrischer Schwingungen vorgesehen ist, welcher über eine HF( = Hochfrequenz)-Leitung mit einem mechanischen Vibrationssystem zur Erzeugung von Ultraschall-Schwingungen verbunden ist, dass das Vibrationssystem eine in den Druckbehälter ragende Sonotrode umfasst, die eine mit Ultraschall-Frequenz vibrierende Fläche aufweist, und dass von der Mediumpumpe befördertes fluides Medium im Druckbehälter auf die vibrierende Fläche gespritzt und daraus durch Zerstäubung beziehungsweise Vernebelung Aerosol im Druckbehälter erzeugt werden kann, welches über die Aerosolleitung aus dem Druckbehälter zum Aerosolaustritt gefördert werden kann.

Damit kann dann ein zentrales Druckluft-Versorgungsnetz in einem einschlägigen Betrieb tatsächlich um mindestens 1 bar kleiner ausgelegt werden, als es beim Stand der Technik möglich wäre. Das reduziert sowohl das erforderliche Investitionsvolumen als auch die Betriebskosten ganz erheblich, da dieses Druckluft-Versorgungsnetz logischerweise für sämtliche Druckluftverbraucher (Maschinen) im gesamten Werk zur Verfügung stehen muss und nunmehr eben mit ganz deutlich geringerer Druckleitung dimensioniert werden kann.

Durch den erfindungsgemäß vorgesehenen Ultraschall-Generator wird eine hochfrequente elektrische Energie erzeugt, die dem als mechanisches Resonanzsystem wirkenden Vibrationssystem zugeführt wird. Die elektrischen Schwingungen werden dort zu mechanischen Schwingungen gleicher Frequenz umgewandelt, in einen gewünschten Frequenzbereich. übersetzt und dieses mechanische Signal auf die Sonotrode zur Erzeugung von Aerosol im Druckbehälter abgegeben. Gleichzeitig wird von der Mediumpumpe befördertes fluides Medium im Druckbehälter auf die vibrierende Fläche der Sonotrode gespritzt und daraus durch Zerstäubung beziehungsweise Vernebelung Aerosol im Druckbehälter erzeugt, welcher über die Aerosolleitung aus dem Druckbehälter zum Aerosolaustritt gefördert wird.

Durch Veränderung der Frequenz kann die Tröpfchengröße des Aerosols verändert werden. Je höher die Frequenz ist, desto kleiner werden die Aerosoltröpfchen.

An vielen Maschinen werden viele unterschiedliche Werkzeuge eingesetzt die verschiedene Aerosolmengen und Aerosoldrücke benötigen um optimal trocken zu zerspanen. Momentan gängige Praxis ist eine Einstellung, die für alle passt, aber zur Folge hat, dass die Ölmenge im Aerosol meist zu hoch ist.
Dies führt zur Verunreinigung der Maschinen, des zu zerspanenden Materials und auch zum Werkzeugbruch.

Ultraschall-Generatoren zur Erzeugung von Aerosolen sind per se etwa bekannt aus den Internetseiten
http://www.ultrasonics.de/start-deutsch/vernebeln-5-6/
oder
www.pi-medical.de/anwendungen/pumpen dosieren/aerosolerzeugung.htm

Auf den Internetseiten
http://www.piceramic.de/piezo anwendungen mehr.php?appid=9
oder
http://www.multisonic.de/flash/D 01 Navigation 04 vorteile.swf
ist die Hauptanwendung dieser bekannten Ultraschall-Generatoren näher beschrieben, nämlich die Erzeugung von Aerosolen für medizinische Zwecke, insbesondere zur Inhalation von Wirkstoffen. Dabei ist selbstverständlich ein Druck von mindestens 2 Atmosphären, wie er bei einer gattungsgemäßen Vorrichtung der eingangs definierten Art erforderlich ist, keinesfalls zulässig, so dass diese medizinischen Vorrichtungen technisch nicht mit den genannten gattungsgemäßen Vorrichtungen vergleichbar sind.

Besonders bevorzugt ist eine Klasse von Ausführungsformen der erfindungsgemäßen Vorrichtung, die sich dadurch auszeichnen, dass das Vibrationssystem einen Konverter umfasst, welcher die hochfrequenten elektrischen Schwingungen aus dem Ultraschall-Generator in mechanische HF-Schwingungen umwandeln kann.

Bei vorteilhaften Weiterbildungen dieser Klasse von Ausführungsformen umfasst das Vibrationssystem einen Booster, welcher die mechanischen HF-Schwingungen aus dem Konverter in Ultraschall-Schwingungen einer gewünschten Frequenz übersetzen und auf die Sonotrode weiterleiten kann.

In der Regel wird der Ultraschall-Generator so ausgelegt sein, dass er hochfrequente elektrische Schwingungen in einem Frequenzbereich von 10kHz bis 500MHz, vorzugsweise zwischen 20kHz und 80kHz, erzeugen kann. Durch Veränderung der Frequenz kann die Tröpfchengröße des Aerosols verändert werden. Je höher die Frequenz ist, desto kleiner werden die Aerosoltröpfchen.

Weitere besonders bevorzugte Ausführungsformen der erfindungsgemäßen Vorrichtung sind dadurch gekennzeichnet, dass eine elektrische Steuerungseinheit zur Steuerung der Frequenz der aktuell vom Ultraschall-Generator erzeugten hochfrequenten elektrischen Schwingungen vorgesehen ist. Wird die Maschinensteuerung mit der elektrischen Steuerungseinheit verbunden, kann der Ultraschallgenerator von der Bearbeitungsmaschine angesteuert werden.

Vorteilhaft sind auch Ausführungsformen der Erfindung, bei denen am behälterseitigen Ende der Zuführleitung eine im Druckbehälter angeordnete oder in den Druckbehälter ragende, auf die vibrierende Fläche der Sonotrode gerichtete Mediumdüse vorgesehen ist, über welche von der Mediumpumpe befördertes fluides Medium gezielt auf die vibrierende Fläche gespritzt werden kann. Dadurch kann der Ölanteil im Aerosol für das momentan eingesetzte Werkzeug optimal eingestellt werden. Eine sparsame nahezu trockene Zerspanung ist dadurch ermöglicht. Anschließende Reinigungskosten erübrigen sich damit.

Vorzugsweise ist die Mediumpumpe bei der erfindungsgemäßen Vorrichtung so ausgestaltet, dass sie über eine Saugleitung fluides Medium aus dem Druckbehälter ansaugen kann. Diese Vorgehensweise ermöglicht die Einstellung über die Maschinensteuerung um die optimale Ölmenge im Aerosol für das jeweilige Werkzeug zu erreichen.

Besonders vorteilhaft ist eine Klasse von Ausführungsformen der Erfindung, die sich dadurch auszeichnen, dass die von der Mediumpumpe angesaugte Menge an fluidem Medium einstellbar ist. Dadurch ergibt sich eine Einsparung an Öl und anschließendem Reinigungsaufwand.

Bei bevorzugten Weiterbildungen dieser Klasse von Ausführungsformen ist die Mediumpumpe bezüglich ihrer Förderleistung einstellbar und es ist eine elektrische Steuerungseinheit zur Steuerung der aktuell von der Mediumpumpe angesaugten Menge an fluidem Medium vorgesehen. Dadurch kann der Ölanteil im Aerosol für das momentan eingesetzte Werkzeug optimal eingestellt werden. Eine sparsame nahezu trockene Zerspanung ist dadurch ermöglicht. Anschließende Reinigungskosten erübrigen sich.

Vorteilhaft sind weiterhin Ausführungsformen der erfindungsgemäßen Vorrichtung, bei denen ein pneumatisches Regelventil vorgesehen ist, mit welchem der Druck p im Druckbehälter über eine Druckleitung direkt und/oder durch das Vibrationssystem eingestellt werden kann. Das Regelventil dient zur Kühlung der Sonotrode, dadurch entsteht weniger Wärme. Es dient außerdem zum Einstellen des Druckes für das jeweilige Werkzeug.

Des Weiteren sind Ausführungsformen der Erfindung zu bevorzugen, bei denen eine elektrische Steuerungseinheit zur Steuerung des pneumatischen Regelventils vorgesehen ist, damit der richtige Druck für das jeweilige Werkzeug eingestellt werden kann um weitgehend trocken zu zerspanen und Reinigungskosten am Werkstück einzusparen.

In den Rahmen der vorliegenden Erfindung fällt schließlich auch eine Klasse von Ausführungsformen der erfindungsgemäßen Vorrichtung, die dadurch gekennzeichnet sind, dass eine Kühlleitung vorgesehen ist, die innerhalb einer Aerosolführung vor dem Aerosolaustritt angeordnet ist, in welche ein Kühlmittel eingespeist werden kann, so dass am Aerosolaustritt das austretende Aerosol mit dem Kühlmittel vermischt wird.

Wie oben beschrieben, werden Aerosole häufig zur Kühlung von Werkzeugen an Werkzeugmaschinen eingesetzt. Das Aerosol ist ein Gemisch aus einem Transportgas und fein darin verteilten Flüssigkeitströpfchen, wobei als Flüssigkeit in der Regel Öl eingesetzt wird. Es bildet auf dem Werkzeug eine so genannte Minimalmengenschmierung aus. Die Menge des Aerosols bestimmt, wie stark die Kühlung des Werkzeugs ist. Die Kühlung wird dabei durch die sich auf dem Werkzeug absetzende Flüssigkeit bestimmt. Bei schwierigen Zerspanungsaufgaben ist eine starke Kühlung des Werkzeugs erforderlich, was eine entsprechend große Menge an Aerosol erfordert.

Aerosole stellen jedoch eine Belastung für die Umwelt dar, sodass eine Erhöhung der Aerosolmenge ökologisch problematisch ist und höhere Entsorgungskosten bedeutet. Zur Verringerung dieser Probleme wird vereinzelt eine Kühlung der Aerosolzuführungen vorgenommen, sodass insgesamt weniger Aerosol am Werkzeug benötigt wird.

Ein derartiges Verfahren zur Kühlung von Aerosolen, bei dem das Aerosol zunächst durch ein flüssiges Kühlmedium indirekt durch Hindurchleiten des Aerosols und des Kühlmediums in benachbarten Führungen gekühlt wird, bevor eine Vermischung des Aerosols mit dem Kühlmedium erfolgt, ist - für herkömmliche Vorrichtungen zur Aerosolerzeugung - an sich bekannt aus der EP 2 574 424 A1. Damit wird ein effektives Kühlverfahren für Aerosole bereitgestellt, das umweltfreundlich und auch an bestehenden Werkzeugmaschinen einsetzbar ist.

Durch diese zweistufige Kühlung des Aerosols kann das Aerosol auf Temperaturen bis -70°C abgekühlt werden. Dabei kann das Kühlmedium in mindestens eine Kühlleistung eingespeist werden, die innerhalb einer Aerosolführung verläuft, und am Ende der Aerosolführung das Aerosol mit dem Kühlmedium vermischt werden. Bei dieser Ausgestaltung des Verfahrens lassen sich bestehende Werkzeugmaschinen nachrüsten, indem in die bestehende Aerosolführung mindestens eine Leitung für das Kühlmittel eingeführt wird.

Bei vorteilhaften Weiterbildungen der oben beschriebenen Klasse von Ausführungsformen können das Aerosol und das Kühlmittel in einem Werkzeugspanner einer Werkzeugmaschine miteinander vermischt werden. Vorhandene Werkzeuge können für den Bearbeitungsprozess benutzt werden, da die Abkühlung des Aerosols vor dem Werkzeugeintritt im Spannfutter geschieht.

Zur Vermischung des Aerosols mit dem Kühlmedium kann eine parallele Expansionsdüse eingesetzt werden. Diese kann am Ende der Aerosolführung angeordnet werden, sofern das Werkzeug von außen gekühlt wird. Wird das Aerosol dagegen durch die Werkzeugspindel einer Werkzeugmaschine hindurchgeführt, können das Aerosol und das Kühlmedium in einem Werkzeugspanner der Werkzeugmaschine miteinander vermischt werden. Dadurch wird das Werkzeug direkt gekühlt. Daher ist es günstig, wenn bei Weiterbildungen der oben beschriebenen Klasse von Ausführungsformen das Kühlmittel und das Aerosol in benachbarten Kanälen durch ein Bohr- oder Fräswerkzeug hindurchgeführt wird. Somit kann die gesamte Kühlleistung an der Werkzeugschneide genutzt werden.

Als Kühlmedium können verschiedene Flüssigkeiten eingesetzt werden. Als besonders effektiv haben sich dabei flüssiges CO2 und Stickstoff herausgestellt. Schwer zerspanbares Material (hochwarmfeste Stähle, Titan, Inconel usw.) kann so sehr viel besser zerspant werden, da Schmierung an der Schneide und Kühlung für das Werkzeug vorhanden ist. Diese Materialien werden zunehmend eingesetzt und stellen eine enorme Anforderung an die Werkzeuge. Die Oberflächengüte wird sehr viel besser, dies entspricht zunehmend den Anforderungen des Marktes.

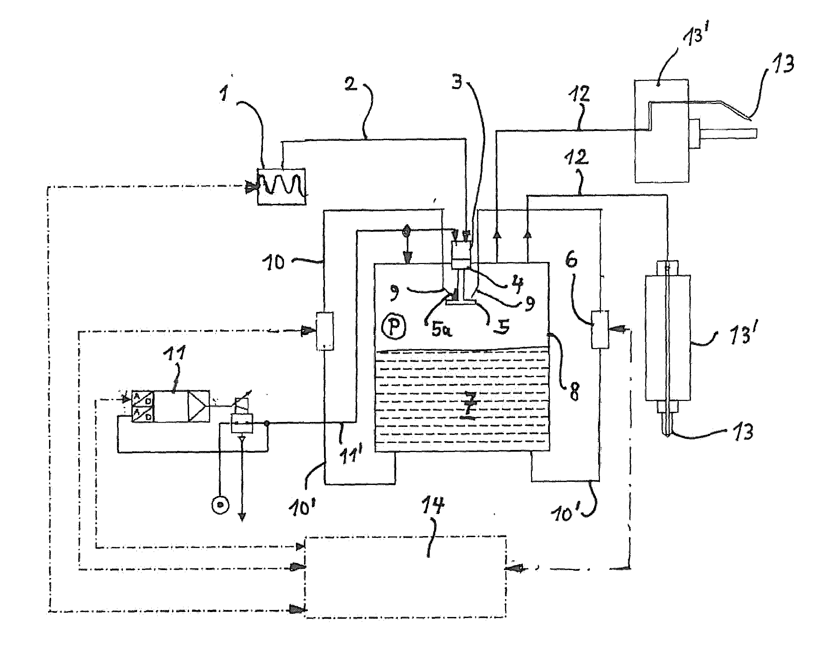

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können jeweils einzeln für sich oder zu mehreren in beliebigen Kombinationen bei Varianten der Erfindung verwirklicht sein.

Die Erfindung wird nachfolgend anhand eines Ausführungsbeispiels unter Bezugnahme auf die Zeichnungen näher erläutert.

Die Figur zeigt eine erfindungsgemäße Vorrichtung zur Aerosolerzeugung in einer schematischen Darstellung.

Die Figur der Zeichnung zeigt den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

In der Figur ist eine erfindungsgemäße Vorrichtung zur Erzeugung von Aerosol aus einem fluiden Medium 7 dargestellt. Dabei erfolgt die Aerosolerzeugung in einem **Druckbehälter 8,** der einen gegenüber dem umgebenden Atmosphärendruck um mindestens 1bar höheren Behälterinnendruck aufweist. Außerdem ist mindestens eine **Mediumpumpe 6** vorgesehen, die fluides Medium 7 über eine **Saugleitung 10'**aus dem Druckbehälter 8 ansaugen und über eine **Zuführleitung 10** wieder in den Druckbehälter 8 zurück befördern kann. Das im Druckbehälter 8 erzeugte Aerosol schließlich wird mittels einer **Aerosolleitung 12** aus dem Druckbehälter 8 zu einem **Aerosolaustritt 13** gefördert.

Erfindungsgemäß zeichnet sich die Vorrichtung dadurch aus, dass ein **Ultraschall-Generator 1** zur Erzeugung hochfrequenter elektrischer Schwingungen vorgesehen ist, welcher über eine **HF-Leitung 2** mit einem mechanischen Vibrationssystem 3, 4, 5 zur Erzeugung von Ultraschall-Schwingungen verbunden ist, das eine in den Druckbehälter 8 ragende **Sonotrode 5** umfasst, die eine mit Ultraschall-Frequenz **vibrierende Fläche 5a** aufweist, und dass von der Mediumpumpe 6 befördertes fluides Medium 7 im Druckbehälter 8 auf die vibrierende Fläche 5a gespritzt und daraus durch Zerstäubung beziehungsweise Vernebelung Aerosol im Druckbehälter 8 erzeugt werden kann, welches über die Aerosolleitung 12 aus dem Druckbehälter 8 zum Aerosolaustritt 13 gefördert werden kann.

Durch die mindestens eine einstellbare Mediumpumpe 6 wird das Medium 7 z.B. Öl aus dem Druckbehälter 8 angesaugt und durch mindestens eine **Mediumdüse 9** auf die mit Ultraschall-Frequenz vibrierende Fläche 5a der Sonotrode 5 gebracht.

Die einstellbare Mediumpumpe 6 steuert die Mediummenge und wird elektrisch durch eine **Steuerung 14** eingestellt.

Bei der in der Zeichnung dargestellten Ausführungsform der Erfindung ist zudem ein **pneumatisches Regelventil 11** vorgesehen, mit dem der Druck p im Druckbehälter 8 über eine **Druckleitung 11'** direkt und/oder durch das Vibrationssystem 3, 4, 5 eingestellt werden kann. Das pneumatische Regelventils 11 kann ebenfalls durch die elektrische Steuerungseinheit 14 angesteuert werden.

Das als Resonanzsystem wirkende Vibrationssystem 3, 4, 5 umfasst einen **Konverter 3,** welcher die hochfrequenten elektrischen Schwingungen aus dem Ultraschall-Generator 1 in mechanische HF-Schwingungen umwandeln kann. Außerdem umfasst das Vibrationssystem 3, 4, 5 auch einen **Booster 4,** welcher die mechanischen HF-Schwingungen aus dem Konverter 3 in Ultraschall-Schwingungen einer gewünschten Frequenz übersetzen und auf die Sonotrode 5 weiterleiten kann.

Der Ultraschall-Generator 1 kann ebenfalls elektrisch durch die Steuerung 14 oder manuell eingestellt werden und gibt das elektrische Ultraschall-Signal 2 auf das Vibrationssystem 3, 4, 5 das dann die Sonotrode 5 zum Schwingen bringt.

Im Behälter 8, der unter dem Binnendruck p steht, wird die eingestellte Mediummenge durch die Düse 9 auf die schwingende Sonotrode 5 gebracht. Durch die schwingende Sonotrode 5 wird das Medium vernebelt (zerstäubt). Da der Behälter unter Druck steht, kann das durch Ultraschall erzeugte Aerosol durch die Aerosolleitung 12 zur Wirkstelle 13 gefördert werden.

Bei der in der Zeichnung dargestellten Ausführungsform der erfindungsgemäßen Vorrichtung ist zudem eine Kühlleitung vorgesehen, die innerhalb einer **Aerosolführung 13'** vor dem Aerosolaustritt 13 angeordnet ist, in welche ein Kühlmittel eingespeist werden kann, so dass am Aerosolaustritt 13 das austretende Aerosol mit dem Kühlmittel vermischt wird.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Vorrichtung zur Erzeugung von Aerosol aus einem fluiden Medium (7), insbesondere einem flüssigen Kühlmedium wie beispielsweise Öl, in einem Druckbehälter (8), der einen gegenüber dem umgebenden Atmosphärendruck um mindestens 1 bar höheren Behälterinnendruck aufweist, mit mindestens einer Mediumpumpe (6), die fluides Medium (7) über eine Zuführleitung (10) in den Druckbehälter (8) befördert, sowie mit einer Aerosolleitung (12), über welche im Druckbehälter (8) erzeugtes Aerosol aus dem Druckbehälter (8) zu einem Aerosolaustritt (13) gefördert werden kann,
**dadurch gekennzeichnet,**
**dass** ein Ultraschall-Generator (1) zur Erzeugung hochfrequenter elektrischer Schwingungen vorgesehen ist, welcher über eine HF(=Hochfrequenz)-Leitung (2) mit einem mechanischen Vibrationssystem (3, 4, 5) zur Erzeugung von Ultraschall-Schwingungen verbunden ist,
**dass** das Vibrationssystem (3, 4, 5) eine in den Druckbehälter (8) ragende Sonotrode (5) umfasst, die eine mit Ultraschall-Frequenz vibrierende Fläche (5a) aufweist,
und **dass** von der Mediumpumpe (6) befördertes fluides Medium (7) im Druckbehälter (8) auf die vibrierende Fläche (5a) gespritzt und daraus durch Zerstäubung beziehungsweise Vernebelung Aerosol im Druckbehälter (8) erzeugt werden kann, welches über die Aerosolleitung (12) aus dem Druckbehälter (8) zum Aerosolaustritt (13) gefördert werden kann.

2. Vorrichtung nach Anspruch 1, **dadurch gekennzeichnet, dass** das Vibrationssystem (3, 4, 5) einen Konverter (3) umfasst welcher die hochfrequenten elektrischen Schwingungen aus dem Ultraschall-Generator (1) in mechanische HF-Schwingungen umwandeln kann.

3. Vorrichtung nach Anspruch 2, **dadurch gekennzeichnet, dass** das Vibrationssystem (3, 4, 5) einen Booster (4) umfasst, welcher die mechanischen HF-Schwingungen aus dem Konverter (3) in Ultraschall-Schwingungen einer gewünschten Frequenz übersetzen und auf die Sonotrode (5) weiterleiten kann.

4. Vorrichtung nach einem der Ansprüche 1 bis 3, **dadurch gekennzeichnet, dass** der Ultraschall-Generator (1) hochfrequente elektrische Schwingungen in einem Frequenzbereich von 10kHz bis 500MHz, vorzugsweise zwischen 20kHz und 80kHz, erzeugen kann.

5. Vorrichtung nach einem der vorhergehenden Ansprüche, **dadurch gekennzeichnet, dass** eine elektrische Steuerungseinheit (14) zur Steuerung der Frequenz der aktuell vom Ultraschall-Generator (1) erzeugten hochfrequenten elektrischen Schwingungen vorgesehen ist.

6. Vorrichtung nach einem der vorhergehenden Ansprüche, **dadurch gekennzeichnet, dass** am behälterseitigen Ende der Zuführleitung (10) eine im Druckbehälter (8) angeordnete oder in den Druckbehälter (8) ragende, auf die vibrierende Fläche (5a) der Sonotrode (5) gerichtete Mediumdüse (9) vorgesehen ist, über welche von der Mediumpumpe (6) befördertes fluides Medium (7) gezielt auf die vibrierende Fläche (5a) gespritzt werden kann.

7. Vorrichtung nach einem der vorhergehenden Ansprüche, **dadurch gekennzeichnet, dass** die Mediumpumpe (6) über eine Saugleitung (10') fluides Medium (7) aus dem Druckbehälter (8) ansaugen kann.

8. Vorrichtung nach einem der vorhergehenden Ansprüche, **dadurch gekennzeichnet, dass** die von der Mediumpumpe (6) angesaugte Menge an fluidem Medium (7) einstellbar ist.

9. Vorrichtung nach Anspruch 8, **dadurch gekennzeichnet, dass** die Mediumpumpe (6) bezüglich ihrer Förderleistung einstellbar ist, und dass eine elektrische Steuerungseinheit (14) zur Steuerung der aktuell von der Mediumpumpe (6) angesaugten Menge an fluidem Medium (7) vorgesehen ist.

10. Vorrichtung nach einem der vorhergehenden Ansprüche, **dadurch gekennzeichnet, dass** ein pneumatisches Regelventil (11) vorgesehen ist, mit dem der Druck p im Druckbehälter (8) über eine Druckleitung (11') direkt und/oder durch das Vibrationssystem (3, 4, 5) eingestellt werden kann.

11. Vorrichtung nach einem der vorhergehenden Ansprüche, **dadurch gekennzeichnet, dass** eine elektrische Steuerungseinheit (14) zur Steuerung des pneumatischen Regelventils (11) vorgesehen ist.

12. Vorrichtung nach einem der vorhergehenden Ansprüche, **dadurch gekennzeichnet, dass** eine Kühlleitung vorgesehen ist, die innerhalb einer Aerosolführung (13') vor dem Aerosolaustritt (13) angeordnet ist, in welcher ein Kühlmittel eingespeist werden kann, so dass am Aerosolaustritt (13) das austretende Aerosol mit dem Kühlmittel vermischt wird.

13. Vorrichtung nach Anspruch 12, **dadurch gekennzeichnet, dass** das Aerosol und das Kühlmittel in einem Werkzeugspanner einer Werkzeugmaschine miteinander vermischt werden können.

14. Vorrichtung nach einem der Ansprüche 12 oder 13, **dadurch gekennzeichnet, dass** das Kühlmittel und das Aerosol in benachbarten Kanälen durch ein Bohr- oder Fräswerkzeug hindurchgeführt werden.

15. Vorrichtung nach einem der Ansprüche 12 bis 14, **dadurch gekennzeichnet, dass** als Kühlmittel flüssiges CO₂ oder flüssiger Stickstoff verwendet wird.
